# NOUVEAU FASCICULE DE BREVET EUROPEEN

(11) **EP 2 043 840 B2**
(45) Date de publication et mention de la décision concernant l'opposition: **06.10.2021**
(45) Mention de la délivrance du brevet: 02.09.2015
(21) Numéro de dépôt: 07803876.7
(22) Date de dépôt: 17.07.2007
(51) Int. Cl.: B29C 49/48, B29C 33/00, B29C 33/04, F16L 37/56, B29C 33/26, B29C 47/92, B29C 35/16

(54) **DISPOSITIF DE FABRICATION DE RECIPIENTS COMPRENANT UN MOULE ET UNE FICHE DE RACCORDEMENT FLUIDIQUE**
VORRICHTUNG ZUR HERSTELLUNG VON BEHÄLTER DIE EIN FORMWERKZEUG MIT EINER FLUIDKUPPLUNGSANORDNUNG AUFWEIST
CONTAINER MANUFACTURING SYSTEM COMPRISING A MOULD AND A FLUID CONNECTION FITTING

(30) Priorité: 21.07.2006 FR 0606642
(43) Date de publication de la demande: 08.04.2009
(60) Demande divisionnaire: 09008200.9
(73) Titulaire: Sidel Participations, 76930 Octeville Sur Mer (FR)
(72) Inventeur: DAGORN, Daniel, 76930 Octeville-Sur-Mer (FR)
(74) Mandataire: Sidel Group
(86) Numéro de dépôt international: PCT/FR2007/001219
(87) Numéro de publication internationale: WO 2008/009808

(56) Documents cités:
- DE-A1- 3 529 052
- DE-A1- 10 033 412
- DE-C1- 3 613 543
- DE-U1- 20 318 583
- JP-A- 63 072 515
- US-A1- 5 686 122
- US-A1- 6 036 469
- US-B1- 6 447 281
- "TEMPERIERMITTEL UND ELEKTRIK AUTOMATISCH KUPPELN" KUNSTSTOFFE, CARL HANSER VERLAG, MUNCHEN, DE, vol. 80, no. 7, juillet 1990 (1990-07), page 771, XP000159973 ISSN: 0023-5563

## Description

L'invention a trait à la fabrication des récipients par soufflage à partir d'ébauches, généralement en matière thermoplastique tel que PET.

Rappelons que le soufflage d'un récipient a lieu dans un moule dont la paroi définit une cavité au sein de laquelle est introduite l'ébauche, cette dernière venant, au cours du soufflage, épouser la paroi sous l'effet de la pression gazeuse élevée qui règne dans l'ébauche, laquelle est préalablement chauffée de manière à permettre sa déformation plastique.

Il est connu de munir le moule d'un système de régulation thermique. Selon les applications auxquelles sont destinés les récipients, soit on refroidit le moule afin de maintenir sa température au-dessous de la température de transition vitreuse (c'est notamment le cas dans la fabrication des récipients destinés à recevoir des eaux plates, le moule étant maintenu à une température comprise entre 20 et 65°C), soit on le chauffe à des températures supérieures à la température de transition vitreuse, afin de conférer au matériau une cristallinité suffisante pour le rendre résistant à la déformation lors d'un remplissage à chaud (récipient dit HR, de l'anglais *heat resistant).*

La régulation thermique est réalisée par circulation d'un fluide caloporteur (il s'agit généralement d'eau ou d'huile) dans au moins une canalisation formée dans la paroi du récipient. Selon que l'on souhaite réguler thermiquement le moule en totalité ou en partie, la canalisation peut s'étendre sur toute la hauteur du moule, ou être localisée dans une zone particulière (par exemple à proximité du col ou du fond du récipient).

La canalisation débouche généralement sur une face externe du moule et présente un orifice d'entrée, raccordé à un conduit d'amenée du fluide, et un orifice de sortie, raccordé à un conduit d'évacuation du fluide, dont la circulation est assurée par une pompe externe au moule. Lors des opérations de réglage, au cours desquelles on remplace les moules, les conduits doivent être débranchés du moule à démonter, puis être rebranchés sur le nouveau moule.

Les brevets américains US 6 444 159 et US 6 447 281 au nom de Sidel, Inc. illustrent cette technologie, laquelle donne satisfaction mais mérite, de l'avis des inventeurs, d'être perfectionnée car le branchement des conduits sur le moule s'avère assez malaisé.

Un but de l'invention est de faciliter le branchement et le débranchement des conduits d'amenée et d'évacuation du fluide caloporteur.

A cet effet, l'invention propose un dispositif selon la revendication 1.

Le raccordement fluidique du moule peut ainsi être réalisé d'un seul geste, consistant à brancher la fiche sur le moule. Il en résulte une simplification des opérations et un gain de temps substantiel lors du réglage.

Suivant un mode de réalisation, le moule porte une partie mâle d'accouplement mécanique, par exemple sous forme d'un embout, la fiche portant une partie femelle complémentaire d'accouplement mécanique, notamment sous forme d'un trou muni de moyens mobiles de retenue de l'embout, lesquels sont par exemple portés par un bouton déplaçable perpendiculairement audit trou. Plus précisément, l'embout peut être muni d'un bourrelet annulaire propre à venir en prise avec un lamage formé dans le bouton.

Suivant encore un mode de réalisation, le moule porte une partie mâle d'accouplement fluidique, par exemple sous la forme d'un embout muni d'une chemise en saillie, la fiche portant une partie femelle complémentaire d'accouplement fluidique, par exemple sous la forme d'une ouverture munie d'un système mobile d'obturation déplaçable par introduction de la chemise dans l'ouverture.

Le moule et la fiche peuvent en outre être munis de moyens complémentaires de raccordement électrique, qui comprennent par exemple une paire de bornes électriques portées par le moule, lesquelles sont par exemple reliées aux conducteurs d'un thermocouple monté sur le moule pour y réaliser une prise de température, et une paire de connecteurs complémentaires portés par la fiche, de sorte que l'on réalise simultanément le branchement fluidique et le branchement électrique.
- la figure 1 est une vue en perspective montrant un dispositif de fabrication de récipients, comportant un moule et une paire de fiches pour le branchement de conduits d'amenée et d'évacuation d'un fluide caloporteur ;

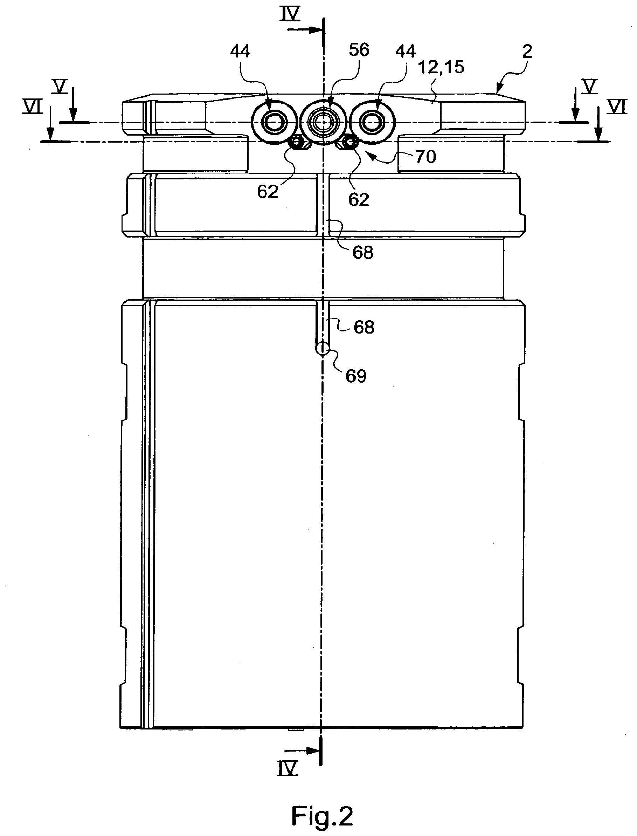

- la figure 2 est une vue d'élévation en plan du moule de la figure 1 ;
- la figure 3 est une vue d'un détail du moule de la figure 2 ;

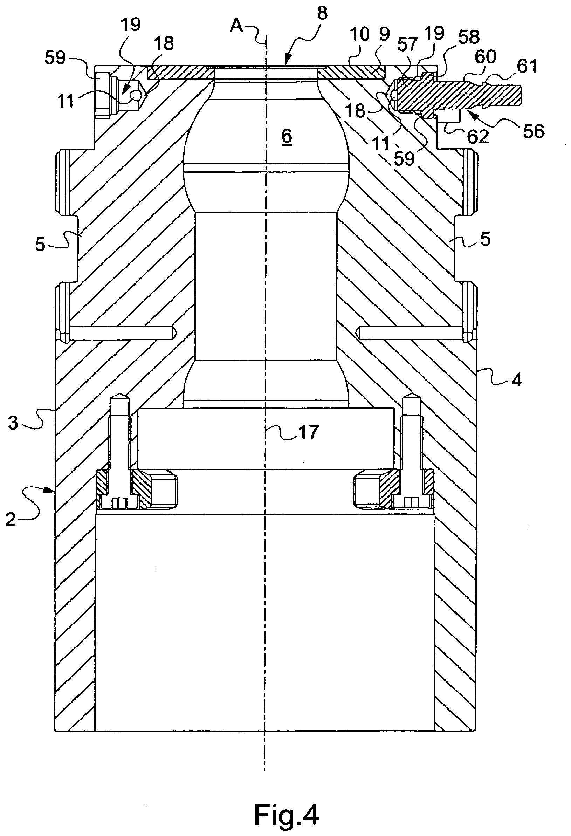

- la figure 4 est une vue en coupe du moule de la figure 2, suivant le plan de coupe IV-IV ;
- la figure 5 est une vue en coupe du moule de la figure 2, suivant le plan de coupe V-V ;
- la figure 6 est une vue en coupe du moule de la figure 2, suivant le plan de coupe VI-VI ;
- la figure 7 est une vue en perspective éclatée montrant une fiche et un système de fixation amovible de cette fiche sur le moule, dans une configuration dissociée ;

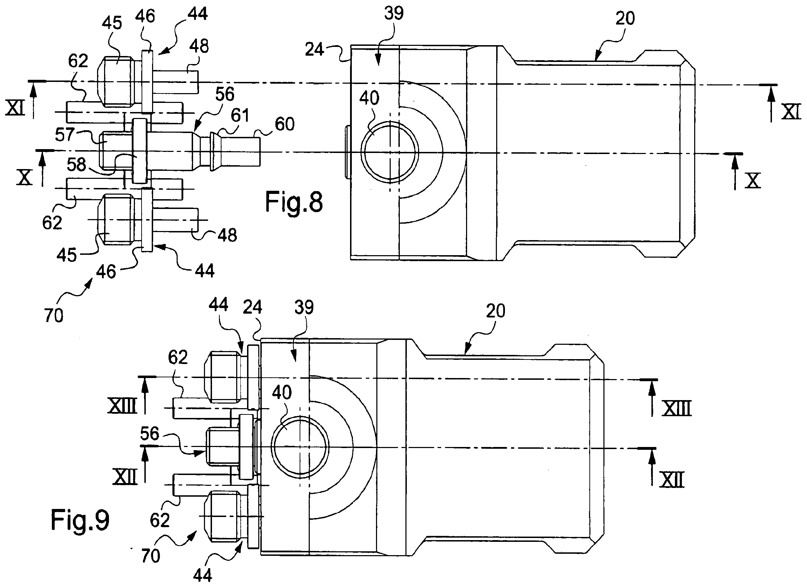

- la figure 8 est une vue de dessus de la fiche et du système de fixation de la figure 7 ;
- la figure 9 est une vue similaire à la figure 8, dans une configuration assemblée ;
- la figure 10 est une vue en coupe montrant la fiche et le système de fixation de la figure 8, suivant le plan de coupe X-X ;
- la figure 11 est une vue en coupe montrant la fiche et le système de fixation de la figure 8, suivant le plan de coupe XI-XI ;
- la figure 12 est une vue en coupe montrant la fiche et le système de fixation de la figure 9, suivant le plan de coupe XII-XII ;
- la figure 13 est une vue en coupe montrant la fiche et le système de fixation de la figure 9, suivant le plan de coupe XIII-XIII ;

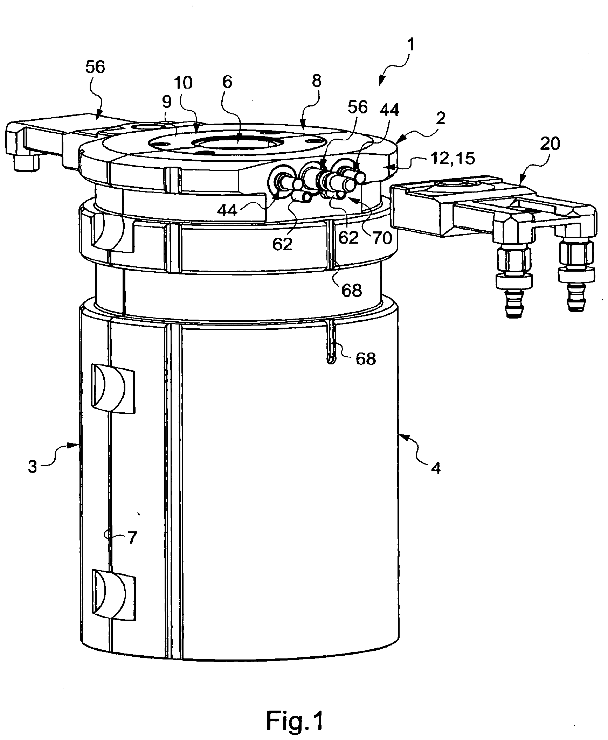

Sur la figure 1 est représenté un dispositif **1** de fabrication de récipients. Ce dispositif **1** comprend un moule **2** comportant deux demi-moules **3, 4** sensiblement symétriques réalisés dans un matériau métallique (généralement en acier ou dans un alliage d'aluminium) formant ensemble une paroi **5** globalement cylindrique de révolution autour d'un axe **A** principal et délimitant sur une face interne une cavité **6** destinée à conférer sa forme à un récipient réalisé par soufflage ou étirage soufflage, dans la cavité **6,** d'une ébauche en matière plastique préalablement chauffée à une température supérieure à sa température de transition vitreuse. Les demi-moules **3, 4** sont articulés le long d'une charnière **7** pour permettre l'ouverture du moule **2** en vue de l'introduction de l'ébauche. Un fond de moule (non représenté) vient s'intercaler entre les deux demi-moules **3, 4** pour former le fond du récipient.

La structure générale d'un tel moule **2,** dénommé « moule portefeuille », est décrite dans la demande de brevet français FR 2 856 333 et dans la demande internationale correspondante WO 05/002820, toutes deux au nom de la demanderesse, auxquelles l'homme du métier pourra se référer.

À une extrémité supérieure **8,** correspondant à un col du récipient à former, le moule **2** comprend une platine **9,** formée de deux parties symétriques montées chacune sur un demi-moule **3, 4,** platine **9** dont une face supérieure **10** forme une face d'appui pour une tuyère (non représentée) d'amenée d'air sous pression grâce auquel est réalisé le soufflage du récipient.

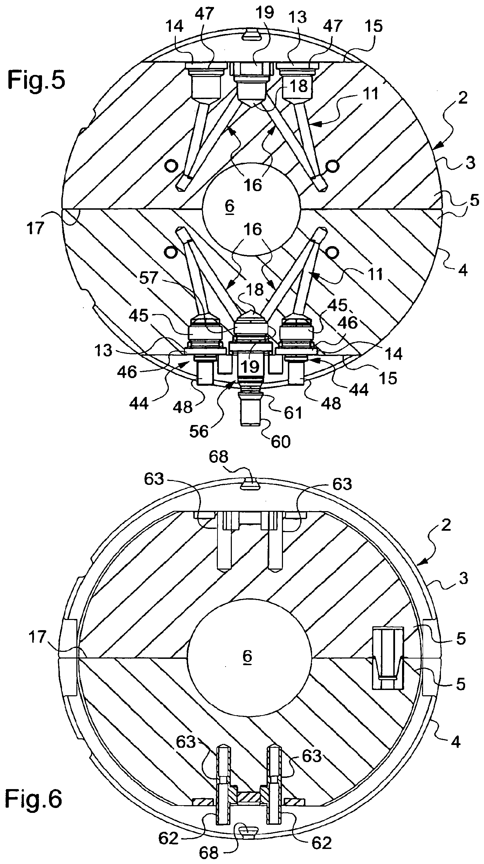

Comme illustré sur la figure 5, la paroi **5** du moule comprend, du côté de son extrémité supérieure **8,** deux canalisations **11,** chacune percée dans un demi-moule **3, 4,** pour permettre la circulation dans la paroi **5** d'un fluide caloporteur destiné à assurer le refroidissement (ou la chauffe) de la paroi **5.**

Chaque canalisation **11** débouche sur une face **12** externe du moule **2** en un orifice **13** d'entrée, par lequel est amené le fluide caloporteur, et en un orifice **14** de sortie, par lequel est évacué le fluide caloporteur après avoir effectué un échange thermique avec la paroi **5.** Comme cela est représenté sur la figure 5, les orifices **13, 14** sont voisins, et sont formés chacun par un perçage réalisé dans la paroi **5** à partir d'un méplat **15** formé dans la face **12** externe du moule **2** parallèlement à l'axe **A** principal. Chaque canalisation **11** s'étend dans un plan transversal perpendiculaire à l'axe **A** principal, et présente une configuration en W comprenant deux sections **16** en V qui, partant chacune d'un orifice **13, 14,** s'étendent jusqu'à proximité d'un plan de joint **17** séparant les deux demi-moules **3, 4,** et se rejoignent dans une chambre **18** intermédiaire commune formée par une extrémité d'un perçage **19** central réalisé dans le méplat **15** entre l'orifice d'entrée **13** et l'orifice de sortie **14.**

Le dispositif **1** comprend conformément à l'invention une fiche **20** se présentant sous la forme d'un boîtier dans lequel sont formés un conduit **21** d'amenée du fluide caloporteur, et un conduit **22** d'évacuation du fluide caloporteur. Les conduits **21, 22** présentent des sections principales **23** sensiblement parallèles, qui débouchent sur une face avant **24** de la fiche en deux ouvertures **25**, **26** dont l'entraxe est égal à celui des orifices **13**, **14**. Les conduits **21**, **22** présentent, à l'opposé de la face avant **24**, des sections secondaires **27**, qui prolongent les sections principales **23** perpendiculairement à celles-ci et sont formées pour partie dans des embouts **28** sur lesquels sont montées des tubulures flexibles (non représentées), respectivement d'amenée et d'évacuation du fluide caloporteur.

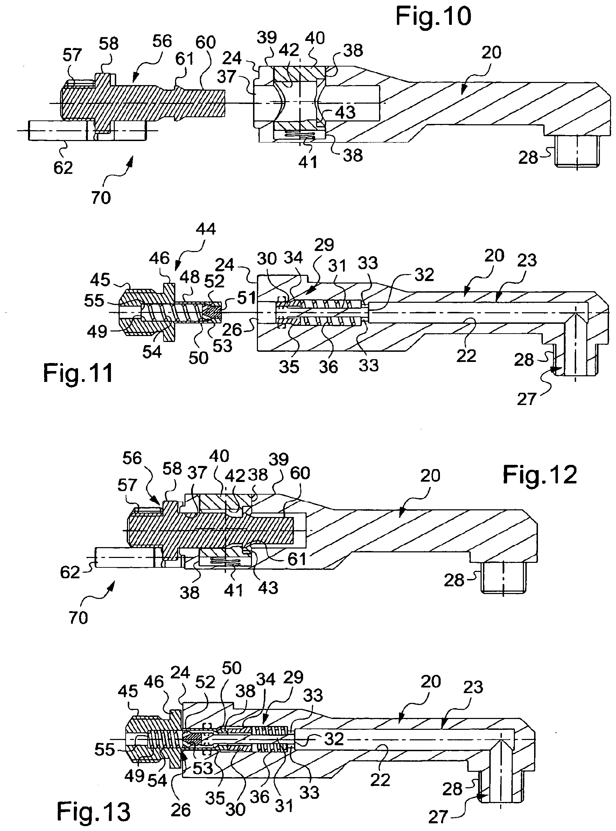

La fiche **20** comprend un système **29** d'obturation de chaque conduit **21, 22,** qui comprend une soupape **30** cylindrique montée sur une tige **31** qui s'étend coaxialement au conduit **21, 22,** à partir d'un voile **32** percé de trous 33, en direction de l'ouverture **25, 26.** La soupape **30** présente une portée **34** tronconique apte à venir s'appliquer contre un siège **35** de soupape tronconique complémentaire, formé dans le conduit **21, 22.** La soupape **30** est montée coulissante sur la tige **31** entre une position d'obturation (figure 11), dans laquelle sa portée **34** est en appui contre le siège **35** de soupape, empêchant ainsi la circulation du fluide, et une position d'ouverture (figure 13) dans laquelle la soupape **30** est écartée du siège **35,** permettant ainsi la circulation du fluide. La soupape **30** est sollicitée en permanence par un ressort **36** de rappel interposé entre la soupape **30** et le voile **32.**

La fiche **20** présente, entre les ouvertures **25, 26,** un trou **37** central percé perpendiculairement à la face avant **24.** Un alésage **38** est percé dans la fiche **20** à partir d'une face **39** supérieure, perpendiculairement au trou **37** qu'il intersecte. Un bouton **40** est monté dans l'alésage **38** avec interposition, entre une extrémité interne du bouton **40** et un fond de l'alésage **38,** d'un ressort **41** de rappel fonctionnant en compression. Comme cela est visible sur la figure 10, le bouton **40** présente un alésage **42** sensiblement coaxial au trou **37** dont il assure la continuité, et qui se termine, du côté opposé à la face avant **24,** par un lamage **43.**

Chaque demi-moule **3, 4** est muni d'une paire d'embouts **44** d'accouplement fluidique, introduits chacun dans un orifice **13, 14** de la canalisation **11.** Chaque embout **44** comprend un corps **45** fileté par lequel il est vissé dans l'orifice **13, 14** correspondant, le corps **45** se prolongeant par une collerette **46** venant se loger dans un lamage **47** complémentaire formé autour de l'orifice **13, 14** pour assurer un positionnement correct de l'embout **44** en profondeur par rapport à la paroi **5,** puis par une chemise **48** cylindrique qui, une fois monté l'embout **44,** s'étend en saillie par rapport au méplat **15.** L'embout **44** est percé d'un alésage **49** traversant qui s'étend depuis une extrémité libre de la chemise **48** où il présente un épaulement **50** tronconique formant un siège de clapet, jusqu'à une extrémité opposée du corps **45** où l'alésage **49** débouche dans la canalisation 11.

Un clapet **51,** présentant une portée **52** tronconique et percé de trous **53** obliques traversant débouchant sur la portée **52** et sur une face arrière du clapet **51,** est monté coulissant dans l'alésage **49,** entre une position d'obturation (figure 11) dans laquelle la portée **52** tronconique est appliquée contre le siège **50** de clapet, empêchant ainsi le passage du fluide caloporteur au travers de l'alésage **49,** et une position d'ouverture (figure 13) dans laquelle le clapet **51** est écarté du siège **50** pour permettre le passage du fluide caloporteur au travers de l'alésage **49.** Le clapet **51** est sollicité en permanence par un ressort **54** de rappel interposé entre le clapet **51** et un épaulement **55** formé dans l'alésage **49.**

Chaque demi-moule **3, 4** est en outre pourvu d'un embout **56** d'accouplement mécanique, distinct des embouts **44** d'accouplement fluidique et muni d'une partie **57** filetée par laquelle il est vissé dans le perçage **19** central, cette partie **57** filetée se prolongeant par une collerette **58** venant se loger dans un lamage **59** complémentaire formé autour du perçage **19** pour assurer un positionnement correct de l'embout **56,** puis par un pion **60** sensiblement cylindrique muni sur son pourtour d'un bourrelet **61** annulaire.

À partir d'une configuration où le moule **2** et une fiche **20** sont initialement désaccouplés (tel qu'illustré dans la partie supérieure droite de la figure 1), on réalise leur accouplement par emboîtement de la fiche **20** sur les embouts **44, 56,** l'embout **56** d'accouplement mécanique venant s'emmancher dans le trou **37** central de la fiche **20** tandis que les embouts **44** d'accouplement fluidique viennent s'emmancher dans les ouvertures **25, 26,** jusqu'à réaliser l'encliquetage de la fiche **20** lorsque, le bourrelet **61** annulaire ayant dépassé le lamage **43** après avoir repoussé le bouton **40** à l'encontre de son ressort **41** de rappel par glissement contre un bossage réalisé dans l'alésage **42,** le bourrelet **61** vient en prise avec le lamage **43** sans possibilité de retrait, sauf à exercer une pression manuelle sur le bouton **40** à l'encontre de son ressort **41** de rappel.

Dans le même temps, le raccordement est réalisé simultanément et de manière étanche entre le conduit **21** d'amenée et l'orifice **13** d'entrée d'une part, et entre le conduit **22** d'évacuation et l'orifice **14** de sortie d'autre part. Comme cela est illustré sur la figure 13, la chemise **48** vient repousser la soupape **30** vers sa position d'ouverture à l'encontre de son ressort **36** de rappel, tandis que la tige **31** repousse le clapet **51** vers sa position d'ouverture à l'encontre de son ressort **54** de rappel. Dans cette configuration ouverte, le fluide peut librement circuler du conduit **21** d'amenée vers la canalisation **11** puis vers le conduit **22** d'évacuation en transitant par chaque alésage **49** et en passant au travers des trous **33, 53.**

Pour séparer la fiche **20** du moule **2,** sur lequel elle se trouve ainsi fixée de manière amovible, il suffit d'appuyer sur le bouton **40,** ce qui libère le bourrelet **61** de l'embout **56** d'accouplement mécanique, et de retirer la fiche **20** parallèlement à l'axe des conduits **21, 22.** Au cours du retrait, la soupape **30** et le clapet **51** retrouvent leur position initiale d'obturation, évitant ainsi toute fuite du fluide caloporteur.

Les dispositions qui viennent d'être décrites ont l'avantage de la simplicité, et permettent de réaliser le raccordement fluidique du moule en un seul geste, par lequel on vient simplement emboîter la fiche **20** sur les embouts **44, 56** pour la fixer ensuite de manière amovible par encliquetage sur l'embout **56.**

On comprend à la lecture de ce qui précède que les moyens d'accouplement fluidique et mécanique de la fiche **20** sur le moule **2** comprennent une partie mâle (formée des embouts **44, 56**), portée par le moule **2,** et une partie femelle complémentaire (formée des ouvertures **25, 26** et du trou **37** central) portée par la fiche **20.** Il est bien entendu possible d'inverser cette configuration, en munissant le moule **2** d'une partie femelle et la fiche **20** d'une partie mâle complémentaire.

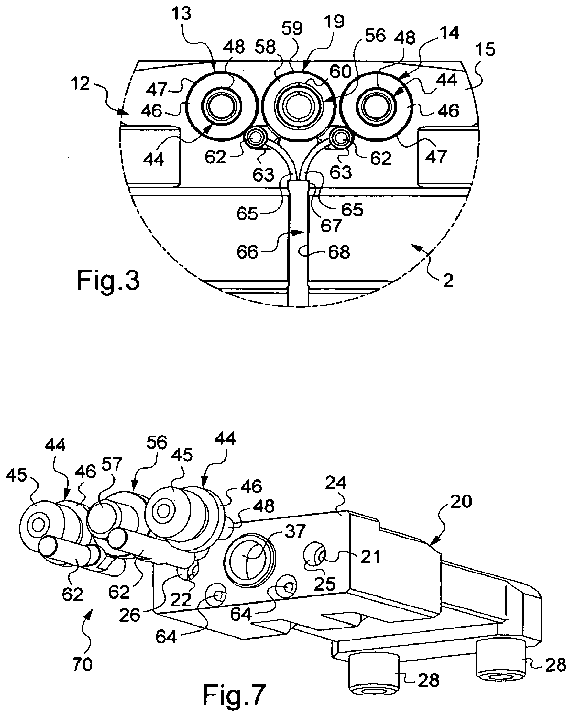

Suivant un mode particulier de réalisation, le moule **2** comprend une instrumentation, telle qu'une sonde de température, nécessitant une alimentation électrique. A cet effet, le moule **2** peut être équipé de bornes **62** électriques sous forme de manchons métalliques emmanchés dans deux perçages **63** réalisés dans chaque demi-moule **3, 4** au voisinage immédiat des embouts **44, 56,** comme cela est notamment illustré sur la figure 3. Comme l'alimentation fluidique, l'alimentation électrique du moule **2** est réalisée via la fiche **20,** laquelle est munie de connecteurs **64** électriques qui, lorsque la fiche **20** est accouplée au moule **2,** viennent s'emboîter dans les bornes **62.** Chaque connecteur **64** est relié à un câble électrique (non représenté) qui assure la liaison avec un générateur basse tension externe au dispositif **1.** Sur les bornes **62** sont branchés deux conducteurs **65** formant ensemble un thermocouple **66** partiellement enveloppé d'une gaine **67** en silicone logée dans une rainure **68** à section trapézoïdale. Une extrémité (non visible) dénudée du thermocouple **66** forme une sonde enfilée dans un perçage **69** pratiqué dans la paroi **5** dont la sonde réalise une prise de température au voisinage de la cavité **6.**

Dans ce mode de réalisation, les embouts **44, 56** et les bornes **62** forment conjointement, dans une zone localisée du moule **2,** une prise **70** à trois fonctions : connexion mécanique, raccordement fluidique, raccordement électrique, sur laquelle on vient brancher la fiche **20.** Un seul geste, consistant à encliqueter la fiche **20** dont la compacité permet sa préhension dans une seule main, permet de réaliser simultanément ces trois fonctions.

## Revendications

1. Dispositif **(1)** de fabrication de récipients par soufflage, ce dispositif **(1)** comprenant :
- un moule **(2)** comportant une paroi **(5)** définissant une cavité **(6)** de moulage et munie d'une canalisation **(11)** pour la circulation d'un fluide caloporteur, cette canalisation **(11)** présentant sur une face **(12)** externe du moule **(2)** un orifice **(13)** d'entrée du fluide caloporteur et un orifice **(14)** de sortie du fluide caloporteur ;
- une fiche **(20)** se présentant sous la forme d'un boîtier dans lequel sont formés un conduit **(21)** d'amenée du fluide caloporteur, et un conduit **(22)** d'évacuation du fluide caloporteur ;
le moule **(2)** et la fiche **(20)** étant munis de moyens (**44, 56** ; **25**, **26, 37**) complémentaires d'accouplement permettant une fixation amovible de la fiche **(20)** sur le moule **(2)** avec raccordement simultané du conduit **(21)** d'amenée à l'orifice **(13)** d'entrée et du conduit **(22)** d'évacuation à l'orifice **(14)** de sortie, les moyens (**44** ; **25, 26)** complémentaires d'accouplement fluidique étant distincts des moyens **(56 ; 37)** complémentaires d'accouplement mécanique.

2. Dispositif **(1)** selon la revendication 1, dans lequel le moule **(2)** porte une partie **(56)** mâle d'accouplement mécanique, la fiche **(20)** portant une partie **(37, 40)** femelle complémentaire d'accouplement mécanique.

3. Dispositif **(1)** selon la revendication 2, dans lequel la partie **(56)** mâle se présente sous la forme d'un embout, la partie **(37, 40)** femelle comprenant un trou **(37)** muni de moyens **(43)** mobiles de retenue de l'embout **(56).**

4. Dispositif **(1)** selon la revendication 3, dans lequel les moyens **(43)** mobiles de retenue sont portés par un bouton **(40)** déplaçable perpendiculairement audit trou **(37).**

5. Dispositif **(1)** selon la revendication 4, dans lequel l'embout **(56)** est muni d'un bourrelet **(61)** annulaire propre à venir en prise avec un lamage **(43)** formé dans le bouton **(40).**

6. Dispositif **(1)** selon l'une des revendications 1 à 5, dans lequel le moule **(2)** porte une partie **(44)** mâle d'accouplement fluidique, la fiche **(20)** portant une partie **(25, 26)** femelle complémentaire d'accouplement fluidique.

7. Dispositif **(1)** selon la revendication 6, dans lequel la partie **(44)** mâle d'accouplement fluidique se présente sous la forme d'un embout **(44)** muni d'une chemise **(48)** en saillie, la partie **(25, 26)** femelle se présentant sous la forme d'une ouverture **(25, 26)** munie d'un système **(29)** mobile d'obturation déplaçable par introduction de la chemise **(48)** dans l'ouverture **(25, 26).**

8. Dispositif **(1)** selon l'une des revendications 1 à 7, dans lequel le moule **(2)** et la fiche **(20)** sont en outre munis de moyens **(62, 64)** complémentaires de raccordement électrique comprenant une paire de bornes **(62)** électriques portées par le moule **(2),** et une paire de connecteurs **(64)** complémentaires portés par la fiche **(20).**

9. Dispositif **(1)** selon la revendication 9, dans lequel les bornes **(62)** sont reliées aux conducteurs **(65)** d'un thermocouple **(66)** monté sur le moule **(2)** pour y réaliser une prise de température.

## Patentansprüche

1. Vorrichtung (1) zur Herstellung von Behältern durch Blasformen, wobei diese Vorrichtung (1) umfasst:
- ein Formwerkzeug (2), aufweisend eine Wand (5), die einen Formungshohlraum (6) definiert und mit einer Kanalisation (11) für die Zirkulation eines Wärmefluids versehen ist, wobei diese Kanalisation (11) auf einer Außenseite (12) des Formwerkzeugs (2) eine Einlassöffnung (13) des Wärmefluids und eine Auslassöffnung (14) des Wärmefluids aufweist;
- eine Anordnung (20), die in Form eines Gehäuses vorliegt, in dem eine Leitung (21) zur Zuführung des Wärmefluids und eine Leitung (22) zur Ableitung des Wärmefluids ausgebildet sind;
wobei das Formwerkzeug (2) und die Anordnung (20) mit komplementären Kupplungsmitteln (44, 56; 25, 26, 37) versehen sind, die eine lösbare Befestigung der Anordnung (20) auf dem Formwerkzeug (2) mit gleichzeitigem Anschluss der Zuführungsleitung (21) an die Einlassöffnung (13) und der Ableitungsleitung (22) an die Auslassöffnung (14) ermöglichen, wobei die komplementären Fluidkupplungsmittel (44; 25, 26) von den komplementären mechanischen Kupplungsmitteln (56; 37) verschieden sind.

2. Vorrichtung (1) nach Anspruch 1, bei der das Formwerkzeug (2) einen mechanischen Einsteckkupplungsteil (56) trägt, wobei die Anordnung (20) einen komplementären mechanischen Aufnahmekupplungsteil (37, 40) trägt.

3. Vorrichtung (1) nach Anspruch 2, bei der der Einsteckteil (56) in Form eines Ansatzes vorhanden ist, wobei der Aufnahmeteil (37, 40) ein Loch (37) umfasst, das mit beweglichen Mitteln (43) zum Halten des Ansatzes (56) versehen ist.

4. Vorrichtung (1) nach Anspruch 3, bei der die beweglichen Haltemittel (43) von einem senkrecht zum Loch (37) verschiebbaren Knopf (40) getragen werden.

5. Vorrichtung (1) nach Anspruch 4, bei der der Ansatz (56) mit einem Ringwulst (61) versehen ist, der mit einer in dem Knopf (40) vorgesehenen Vertiefung (43) in Eingriff gelangen kann.

6. Vorrichtung (1) nach einem der Ansprüche 1 bis 5, bei der das Formwerkzeug (2) einen Fluidkupplungseinsteckteil (44) trägt, wobei die Anordnung (20) einen komplementären Fluidkupplungsaufnahmeteil (25, 26) trägt.

7. Vorrichtung (1) nach Anspruch 6, bei der der Fluidkupplungseinsteckteil (44) in Form eines Ansatzes (44) vorhanden ist, der mit einer vorspringenden Buchse (48) versehen ist, wobei der Aufnahmeteil (25, 26) in Form einer Öffnung (25, 26) vorhanden ist, die mit einem beweglichen Verschlusssystem (29) versehen ist, das durch Einführung der Buchse (48) in die Öffnung (25, 26) verschiebbar ist.

8. Vorrichtung (1) nach einem der Ansprüche 1 bis 7, bei der das Formwerkzeug (2) und die Anordnung (20) ferner mit komplementären elektrischen Anschlussmitteln (62, 64) versehen sind, umfassend ein Paar von elektrischen Klemmen (62), die von dem Formwerkzeug (2) getragen werden, und ein Paar von komplementären Steckern (64), die von der Anordnung (20) getragen werden.

9. Vorrichtung (1) nach Anspruch 8, bei der die Klemmen (62) mit den Leitern (65) eines Thermoelements (66) verbunden sind, das auf dem Formwerkzeug (2) montiert ist, um hier einen Temperaturanstieg zu bewirken.

## Claims

1. Device (1) for manufacturing containers by blow moulding, this device (1) comprising:
- a mould (2) having a wall (5) defining a mould cavity (6) and being provided with a conduit (11) for the circulation of a heat-transfer fluid, this conduit (11) having, on an external face (12) of the mould (2), a heat-transfer fluid inlet port (13) and a heat-transfer fluid outlet port (14);
- a plug (20) in the form of a casing in which there are formed a heat-transfer fluid supply duct (21) and a heat-transfer fluid discharge duct (22);
the mould (2) and the plug (20) being provided with complementary coupling means (44, 56; 25, 26, 37) allowing removable fixing of the plug (20) on the mould (2) with simultaneous connection of the supply duct (21) to the inlet port (13) and of the discharge duct (22) to the outlet port (14), the complementary fluid coupling means (44; 25, 26) being separate from the complementary mechanical coupling means (56; 37).

2. Device (1) according to Claim 1, in which the mould (2) bears a male mechanical coupling part (56), the plug (20) bearing a complementary female mechanical coupling part (37, 40).

3. Device (1) according to Claim 2, in which the male part (56) takes the form of a nozzle, the female part (37, 40) comprising a hole (37) provided with movable means (43) for retaining the nozzle (56).

4. Device (1) according to Claim 3, in which the movable retaining means (43) are borne by a button (40) which can be moved perpendicular to the said hole (37).

5. Device (1) according to Claim 4, in which the nozzle (56) is provided with an annular bead (61) suitable for engaging with a counterbore (43) formed in the button (40) .

6. Device (1) according to one of Claims 1 to 5, in which the mould (2) bears a male fluid coupling part (44), the plug (20) bearing a complementary female fluid coupling part (25, 26).

7. Device (1) according to Claim 6, in which the male fluid coupling part (44) takes the form of a nozzle (44) provided with a projecting sleeve (48), the female part (25, 26) taking the form of an opening (25, 26) provided with a movable plugging system (29) which can be moved by introducing the sleeve (48) into the opening (25, 26).

8. Device (1) according to one of Claims 1 to 7, in which the mould (2) and the plug (20) are additionally provided with complementary electrical connection means (62, 64) comprising a pair of electrical terminals (62) borne by the mould (2) and a pair of complementary connectors (64) borne by the plug (20).

9. Device (1) according to Claim 8, in which the terminals (62) are connected to the conductors (65) of a thermocouple (66) mounted on the mould (2) for measuring a temperature thereof.
